Europäisches Patentamt

(19) European Patent Office

Office européen des brevets

(11) Publication number: **0 043 641**
**A2**

# EUROPEAN PATENT APPLICATION

(21) Application number: **81302025.2**

(22) Date of filing: **07.05.81**

(51) Int. Cl.³: **F 16 H 37/08,** F 16 H 9/18,
F 16 H 3/64

(30) Priority: **19.06.80 US 161159**

(71) Applicant: GENERAL MOTORS CORPORATION,
General Motors Building 3044 West Grand Boulevard,
Detroit Michigan 48202 (US)

(43) Date of publication of application: **13.01.82**
**Bulletin 82/2**

(72) Inventor: **Koivunen, Erkki Antero, 15560 Westbrooke,
Livonia Michigan 48154 (US)**
Inventor: **Sherman, James Francis, 7978 Whitmore Lake
Road, Brighton Michigan 48116 (US)**

(74) Representative: **Breakwell, John Neil Bower et al, Patent
Section General Motors Limited P.O. Box 242 Delaware
Drive, Milton Keynes MK15 8HA (GB)**

(84) Designated Contracting States: **DE FR GB IT NL**

(54) **Variable-ratio power transmission mechanisms.**

(57) A power transmission mechanism has a variable
ratio belt drive input 36, 66, 68, a pair of interconnected
simple planetary gear sets 98, 110 and a differential
gear set 140. The interconnected planetary gear sets are
controlled by a pair of selectively engageable friction
brakes 142, 116 to provide either a forward drive ratio
or a reverse drive ratio. These brakes are designed to
be slippingly engaged for smooth starting. The differen-
tial gear set has an input member 136 connected to the
output of the planetary gear sets and a pair of output
members 168, 170 which are connected to drive axles
adapted to be connected to vehicle drive wheels. The
belt drive, planetary gear sets and differential gear set
are enclosed in a threepiece housing 28, 30, 32 which
is adapted to be connected to an engine. The compo-
nents are arranged within the housing for use in a trans-
verse engine drive system.

POWER TRANSMISSION MECHANISMS

This invention relates to power transmission mechanisms.

By the present invention there is provided a power transmission mechanism characterised by an input member, variable ratio belt drive means connected to said input member, a pair of interconnected simple planetary gear means, one of said planetary gear means having one member continuously drivingly connected to said belt drive means, output differential gear means including a carrier member continuously drivingly connected with one member of the other of said planetary gear means, selectively operable forward brake means operatively connected to another member of each planetary gear means for selectively braking said another members for establishing a forward reduction ratio in both of said planetary gear means, and selectively operable reverse brake means operatively connected to a further member of each planetary gear means for selectively braking said further members for selectively establishing a reverse reduction ratio in said one planetary gear means and a forward reduction ratio in the other of said planetary gear means for providing a reverse reduction ratio between said belt drive means and said output differential gear means.

This arrangement permits a high fixed reduction ratio in the planetary gear sets so that a large overall ratio range can be utilized for the variable ratio belt drive.

Also, the forward and reverse brake means can be used to control starting, so avoiding the need for an input clutch or fluid drive.

The drive components may be housed in a three-piece housing, and are adaptable for use in a transverse engine drive system.

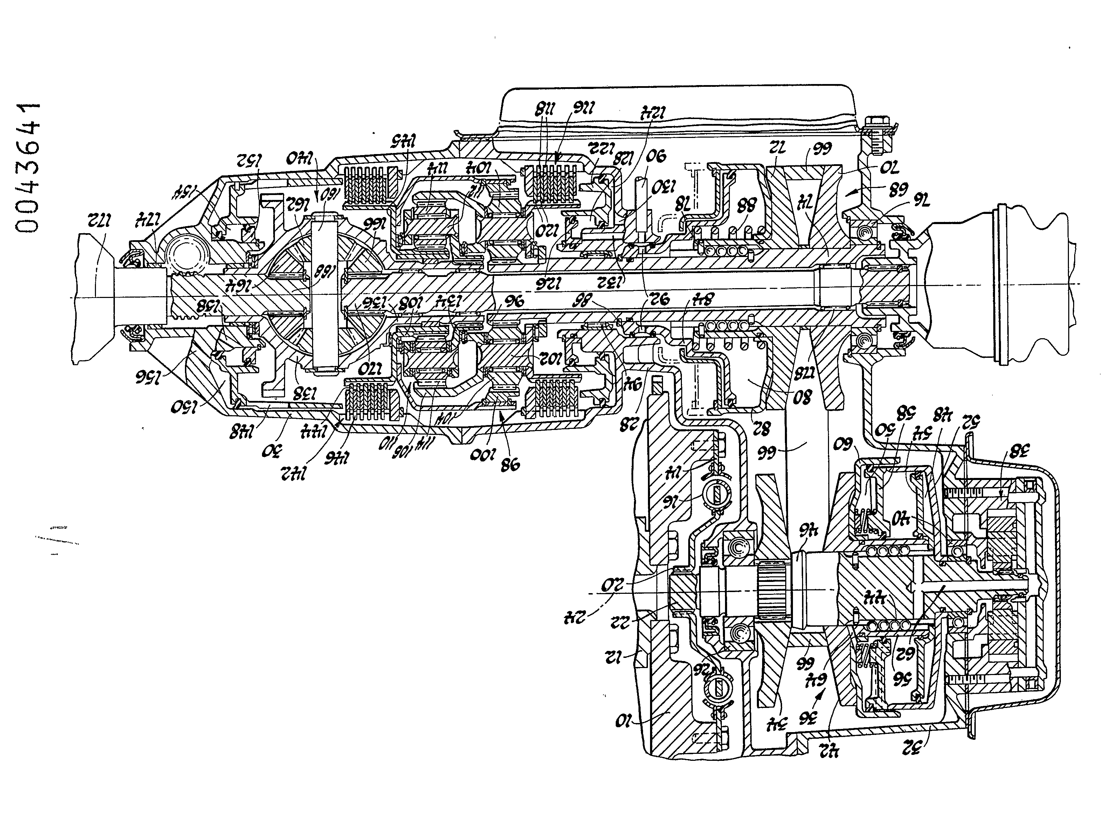

The single Figure of the drawing is a fragmentary section, with some parts in elevation, of one embodiment of a power transmission mechanism in accordance with the present invention.

In the drawing, an engine flywheel 10 is shown drivingly connected to an engine crankshaft 12 and a flex plate 14. The flex plate 14 has secured thereto a torsional vibration damper 16, having a splined inner diameter 20 which is drivingly connected to a shaft 22. The shaft 22 is disposed coaxially with the centerline 24 of the engine crankshaft 12 and is rotatably mounted in a ball bearing 26 which is secured in a central housing portion 28 of a three-piece transmission housing. The transmission housing includes a differential housing portion 30 and a belt drive housing portion 32.

The shaft 22 is drivingly connected to a sheave portion 34 which is part of an input drive pulley or sheave, generally designated 36. The shaft 22 is also drivingly connected to a conventional hydraulic pump, generally designated 38, which is adapted to provide hydraulic control fluid for the transmission in a well-known manner. The shaft 22 is rotatably supported in the housing 32 by a ball bearing 40.

The input drive pulley 36 also includes a movable sheave portion 42 which is slidably disposed on shaft 22 and rotatably connected therewith by a ball spline 44. The portion 42 is free to move longitudinally on the shaft 22 while the portion 34 is fixed on the shaft 22 between the shoulder 46 and the inner race of bearing 26.

The portion 42 is controlled in its longitudinal movement by hydraulic fluid pressure. The portion 42 is moved to the right by hydraulic fluid pressure directed to a pair of chambers 48 and 50. The chamber 48 is formed between a housing 52 and a piston 54, which piston is operatively connected to a sleeve shaft portion 56 formed integrally with the portion 42. The chamber 50 is formed by a stationary divider 58 which abuts the housing 52 and a movable shell 60 which is disposed in abutting relationship with the portion 42. The chambers 48 and 50 receive fluid pressure from a conventional control system, not shown, through a fluid passage 62, the openings containing the ball spline 44 and a passage 64. The input drive pulley 36 is drivingly connected to a belt 66 which in turn is drivingly connected to an output driven pulley generally designated 68. The output driven pulley 68 includes a stationary sheave portion or member 70 and a longitudinally movable sheave portion or member 72. The stationary portion 70 is rotatably connected with a transmission input sleeve shaft 74 which is rotatably supported in the housing 32 by a ball bearing 76. The movable portion 72 is slidably disposed on the shaft 74 and rotatably connected therewith by a ball spline, generally designated 78. The movement of the portion 72 is controlled by hydraulic fluid pressure in a chamber 80 which urges the member 72 to the left.

The chamber 80 is formed by a housing 82 which abuts member 72 and is movable therewith, and a piston member 84 which is disposed on shaft 74 and abuts a snap ring 86 which establishes the longitudinal position of the piston 84 relative to the shaft 74. A spring member 88 is compressed between the housing 82 and the piston 84 so as to urge the sheave portion 72 toward sheave portion 70 to preload belt 66. Fluid pressure is supplied to chamber 80 through a passage 90 and a plurality of openings 92 formed in the piston 84.

The fluid pressure in chamber 80 is controlled so as to maintain the desired tension in belt 66. The pressure in chamber 80 can be controlled in any well-known manner, such as by a variable pressure regulator valve responsive to engine torque demand. Any of the other well-known pressure-controlled devices for transmissions can be utilized also. The pressure in chamber 80 urges the portions 70 and 72 into closer drive relationship and, therefore, imposes a force on belt 66 which tends to move the belt 66 radially outward. The radial outward movement of belt 66 imposes a force on the input drive pulley 36 which tends to separate the portions 34 and 42. Movement of portion 42 is controlled by the hydraulic pressure in chambers 48 and 50. The pressure in chambers 48 and 50 is controlled to establish the drive ratio between pulleys 36 and 68. The pressure level in chambers 48 and 50 must be sufficient to overcome the axial force on sheave portion 72. In the position shown, the pulleys 36 and 68 are in a maximum underdrive position. That is, the speed of the engine will be decreased as it is transmitted from pulley 36 to pulley 68. By increasing the pressure in chambers 48 and 50, the belt 66 will move radially outward on pulley 36 and therfore radially inward on pulley 68. This movement can continue and the ultimate position of belt 66 can be controlled to establish the desired drive ratio between the pulleys 36 and 68. Preferably, the drive ratio is controlled between an underdrive ratio of 2.3:1 and an overdrive ratio of 0.46:1.

The shaft 74 is rotatably supported in the housing 28 by a roller bearing 94. A sun gear 96 is integrally formed on one end of shaft 74. The sun gear is a component of a simple planetary gear set, generally designated 98. The gear set 98 also includes a ring gear 100, a carrier 102, and a plurality of pinion gears 104 which are rotatably mounted on the carrier 102 and in mesh with the sun gear 96 and ring gear 100. The carrier 102 and ring gear 100 are connected to a ring gear 106 and sun gear 108, respectively, of a simple planetary gear set, generally designated 110. The planetary gear set 110 also includes a carrier 112 on which is rotatably mounted a plurality of pinion gears 114 which mesh with the ring gear 106 and sun gear 108.

The carrier 102 is operatively connected to a selectively engageable friction brake, generally designated 116. The brake 116 includes a plurality of friction plates 118 which are spined to the housing 28, a plurality of friction plates 120 which are alternately spaced with the plates 118 and splined to the carrier 102, and a hydraulic piston 122 which is slidably disposed in the housing 28 and is adapted to enforce the friction plates 118 and 120 into abutting relationship such that the carrier 102 can be held stationary.

The piston 122 co-operates with the housing 28 to form a brake apply chamber 124 and with a hub 126 to form a brake release chamber 128. Fluid pressure is supplied to the apply chamber 124 through a passage 130 and to the release chamber 128 through a passage 132. If desired, the chamber 128 can be continuously pressurized, while the chamber 124 is pressurized only when it is desirable to engage brake 116. The brake 116 is the reverse ratio brake since, when this brake is engaged, the input drive from sun gear 96 is reversed as it travels to ring gear 100 while the carrier 102 is stationary. Since the carrier 102 is connected with the ring gear 106, the ring gear 106 will also be stationary when the reverse brake 116 is engaged.

The carrier 112 has a hub portion 134 which is splined to an output sleeve shaft 136 formed integrally with the housing or differential member 138 of a differential gear set, generally designated 140. The sun gear 108, andtherefore ring gear 100, are operatively connected to a forward brake, generally designated 142, which includes a plurality of alternately spaced friction plates 144 and 146 which are splined with a hub 145 of the sun gear 108 and housing 30, respectively. The friction plates 144 and 146 are urged into frictional relationship by a

-6-

piston 148 which is slidably disposed in housing 30 and co-operates therewith to form an apply chamber 150. The piston 148 also co-operates with a hub 152 to form a release chamber 154. The chambers 150 and 154 are pressurized through passages 156 and 158, respectively. When the forward brake 142 is engaged, the ring gear 100 and sun gear 108 are held stationary. Thus, as sun gear 96 is rotated by the engine in a forward direction, the carrier 102 will rotate in a forward direction, driving with it the ring gear 106. Forward rotation of ring gear 106 will result in forward rotation of carrier 112 and therefore output sleeve shaft 136. When the reverse brake 116 is engaged, forward rotation of sun gear 96 will result in reverse rotation of ring gear 100. The rotation of ring gear 100 is transmitted to sun gear 108, which causes the carrier 112 to rotate in the same direction as ring gear 100 but at a reduced speed. Thus, the output sleeve shaft 136 will rotate in a direction opposite to the input shaft 74 when brake 116 is engaged.

The differential carrier 138 of differential gear set 140 has secured thereto a pin member 160, on which is rotatably mounted a plurality of pinion gears 162 which mesh with side gears 164 and 166 in a well-known manner. Side gear 164 is drivingly connected to an output shaft 168, and side gear 166 is drivingly connected to an output shaft 170. The output shafts 168 and 170 are coaxial with the longitudinal axis 172 of the input shaft 74. The sleeve shaft 136 is also coaxial with the axis 172. The output shaft 168 is rotatably supported in the differential housing 30 by a bushing 174 which is secured in the housing 30. The output shaft 170 is rotatably supported in the sleeve shaft 74 by a needle bearing 178.

The hydraulic passages necessary to provide fluid communication with the chambers necessary to operate brakes 116 and 142 can be formed integrally with the housings or they can be plumbed externally by separate pipe members. The release chambers 128 and 154 can be omitted, in which case conventional return springs would be utilized to disengage or release the brakes 116 and 142.

The total forward reduction of planetary gear sets 98 and 110 is preferably 6.16:1, while the reverse reduction ratio provided by these gear sets is preferably 9.67:1. Therefore, when coupled with the variable drive ratios of the pulleys 36 and 68, the transmission will have an overall forward ratio coverage of 14.17:1 to 2.83:1. By maintaining the belt ratio at 1.13:1, the reverse ratio can be held constant at 10.83:1. These are ratios which have been found acceptable to small vehicles operating with an engine having a displacement of approximately 1 liter. These ratios in the gear sets are established by providing ring gear 100 with eighty-two teeth and sun gear 96 with twenty-six teeth, while ring gear 106 has sixty-two teeth and sun gear 108 has thirty teeth. As is well-known in planetary gear sets, these drive ratios can be changed by changing the number of teeth of the various gears. As can be seen in the drawing , the engine centerline 24 is parallel with the axis 172 such that the transmission is readily adapted to transverse drive systems. It is preferable in the operation of the transmission that the brakes 116 and 142 can be controlled during engagement to provide starting devices for the transmission in either forward or reverse. Such controls are well-known in the transmission art. The torsional vibration damper 16 can have any of the well-known damper constructions which are currently available.

Claims:

1.    A power transmission mechanism characterised by an input member (22), variable ratio belt drive means (36,66,68) connected to said input member, a pair of interconnected simple planetary gear means (98 and 110), one (98) of said planetary gear means having one member (96) continuously drivingly connected to said belt drive means, output differential gear means (140) including a carrier member (138) continuously drivingly connected with one member (112) of the other (110) of said planetary gear menas, selectively operable forward brake means (142) operatively connected to another member (100,108) of each planetary gear means for selectively braking said another members for establishing a forward reduction ratio in both of said planetary gear means, and selectively operable reverse brake means (116) operatively connected to a further member (102,106) of each planetary gear means for selectively braking said further members for selectively establishing a reverse reduction ratio in said one planetary gear means and a forward reduction ratio in the other of said planetary gear means for providing a reverse reduction ratio between said belt drive means and said output differential gear means.

2.    A power transmission mechanism according to claim 1, characterised in that said variable ratio belt drive means (36,66,68,) is continuously drivingly connected to a sun gear (96) of said one planetary gear means (98), said carrier member (138) of said output differential gear means (140) is continuously drivingly connected to a carrier member (112) of said other planetary gear means (110), said selectively operable forward brake means (142) is operatively connected to a ring gear (100) of said one planetary gear means and to a sun gear (108) of said other planetary gear means, and said selectively operable reverse brake means (116) is operatively connected to a carrier member (102) of sa

ring gear (106) of said other planetary gear means.